Europäisches Patentamt

European Patent Office

Office européen des brevets

(11) Publication number: **0012464**
A1

(12) **EUROPEAN PATENT APPLICATION**

(21) Application number: 79200705.6

(22) Date of filing: 03.12.79

(51) Int. Cl.³: **D 01 G 1/04, B 29 D 3/02**

(30) Priority: 04.12.78 NL 7811817

(43) Date of publication of application: 25.06.80
Bulletin 80/13

(84) Designated Contracting States: DE FR GB IT NL SE

(71) Applicant: **Akzo N.V., Ijssellaan 82, NL-6826 DW Arnhem (NL)**

(72) Inventor: **Hutzezon, Frits, Kemmenadestraat 20, NL-6825 EV Arnhem (NL)**

(74) Representative: **Sieders, René et al, P.O.Box 314, NL-6800 AH Arnhem (NL)**

(54) **A process and an apparatus for the manufacture of a fibre-reinforced plastics sheet material, the plastics sheet material obtained by this process and the objects formed therefrom.**

(57) The invention relates to a process for manufacturing a plastics sheet material reinforced with organic fibres, such as polyester fibres. A large number of equispaced parallel yarn or thread bundles (6) are fed to a cutter roll (10) and a cooperating pressure roll (11). During the cutting movement the cutting edges of the knives (11) make a movement both in axial and in radial direction of the cutter roll, which has a width of at least 100 cm. The thread bundles are cut into fibres (30) at such a distance from the plastics sheet to be formed that the fibres are deposited on a still plastic matrix (12) in the form of substantially unopened fibre bundles. The sheet material (12, 15, 30) obtained by this method has favourable mechanical and physical properties, particularly because the reinforcing fibres are very uniformly distributed.

ACTORUM AG

A process and an apparatus for the manufacture of a fibre-reinforced plastics sheet material, the plastics sheet material obtained by this process and the objects formed therefrom.

The invention relates to a process for the manufacture of a plastics sheet material formed from a resin-containing matrix and reinforced with synthetic organic fibres in which process a large number of equispaced thread bundles which are placed adjacent to each other across the width of the sheet to be formed are fed to a rotary cutter roll extending transversely of the sheet and positioned above it, with the aid of which roll the thread bundles are cut into fibres which as they drop on a plastic matrix are distributed across the width thereof, after which the fibres deposited on the matrix are covered with another layer of said matrix and the resulting plastics fibre-containing sheet material is subjected to an aftertreatment. The invention also comprises an apparatus for the manufacture of a plastics sheet material reinforced with fibres.

A process and an apparatus as indicated above are known from the Canadian Patent Specification 625 175. This known process is intended in the first place for manufacturing glass-fibre reinforced panels. In addition to glass fibres this specification mentions other materials, such as nylon. Although with this known process reasonable results can probably be obtained for glass fibres, it has been found that this known process is unsuitable for the manufacture of sheet material reinforced with synthetic organic fibres such as those of polyester or nylon. Particularly when in the known process use is made of polyester fibres, they will drop on the plastic resin mass in an entirely opened state, i.e. as separate pieces of filament. All the fibres together will consequently take up such a large surface area that the still plastic matrix is entirely covered by it and the distance between the matrix layers will become too great in that the intermediate fibre layer will be too voluminous to obtain the desired m2-weights.

0012464

When the next layer is deposited, it will not come into contact with the lower layer because of the latter being entirely covered by the loose fibres. The resulting endproduct will be of poor quality in that it consists as it where of two poorly adhering halves. These last-mentioned difficulties cannot be solved by reducing the percentage of reinforcing fibres, no sufficient reinforcing effect being obtained below a certain minimum percentage of reinforcing fibres. It has further been found that with the use of the known process and apparatus interruptions will readily occur as a result of the yarn bundles no longer being properly cut.

The present invention has for its object to provide a process of the type indicated above which no longer displays the afore-mentioned drawbacks. The process according to the invention is characterized in that during the cutting movement the cutting edges of the knives move both in axial and in radial direction of the cutter roll, and the adjacent thread bundles extend over an axial length of the cutter roll of 100 cm or more, and the cutting of the thread bundles into fibres is carried out at such a distance from the plastics sheet material to be formed that the freshly cut fibres drop on the still plastic matrix substantially in the unopended state in the form of fibre bundles. By the fibres being deposited on the plastic matrix while substantially unopened is to be understood that the filament pieces into which the separate filament yarns are cut will stick together in the form of fibre bundles or tufts consisting of, say 5-100 substantially parallel fibres. Also when use is made of a sufficiently high percentage of reinforcing fibres, the surface of the lowermost matrix will only be partly covered by the unopened fibre bundles. When the next matrix layer is applied to the first matrix on which unopened fibre bundles are deposited there will be an intimate contact between the upper matrix and the lower matrix as a result of the latter only being partly covered by a thin layer of fibres.

The process according to the invention consequently makes it possible to obtain a homogeneous fibre-reinforced sheet material having optimum mechanical properties.

The process according to the invention is with advantage characterized in that the axial length of the axial component of the cutting movement is not more than 1-5 cm, and the radial component of the cutting movement is not longer than 5-20 mm, and between the beginning and the end of said cutting movement the ratio between the axial and the radial components of the cutting movement is variable, more particularly in such a way that under the influence of the contact of the knives with the bed of filaments the ratio between the axial and the radial components of the cutting movement first increases and subsequently decreases. This cutting process can be realized in a simple manner if according to the invention the knives and the knife holders are mounted for radial and axial movement in a slot by means of a support formed by one or more elastic elements which are so constructed that they can only exert an outwardly directed radial force on the knives. The knife holders being flexibly supported by means of spring elements permits the moment of severing the yarn bundles to be automatically set and adjusted to  the sharpness of the knives and the tension in the yarn bundles. In this way a satisfactorily and smoothly running process is obtained, more or less irrespective of the state of the knives and the generally varying tension in the supplied yarn bundles.

According to the invention the equispaced adjacent thread bundles extend over an axial length of the cutter roll of 100 to 500 cm, preferably 100 to 200 cm. Although the process according to the invention is particularly suitable for manufacturing  sheet material which is reinforced with polyester fibres, it can also be used for making sheet material reinforced with nylon fibres or fibres of aromatic polyamides, more particularly poly-paraphenylene terephthalamide. The process is also suitable for cutting fibres of fully aromatic polyesters.

The invention also comprises an apparatus for cutting thread bundles to be used in the process for the manufacture of fibre-reinforced sheet material, which apparatus is formed by a frame containing a rotatably supported cutter roll provided with a number of knives distributed around its circumference and substantially extending in axial direction of the cutter roll, which apparatus is characterized according to the invention in that guide elements are provided which cooperate with the knives or the knife holders and periodically impart to the separate knives a cutting movement with a component in axial and a component in radial direction of the cutter roll.

An effective embodiment of the apparatus is characterized according to the invention in that each of the knives or knife holders has its end urged into direct or indirect contact with a stationary cam serving to guide the axial movement of the knives, and the knife holder and the cutter roll are provided with cooperating guide elements for imparting the radial movement to the knife holders during said axial movement.

The apparatus according to the invention is with advantage characterized in that the cutter roll and the cooperating pressure roll have an axial length of 100 to 500 cm, preferably 100 to 200 cm, and are placed on a machine for the manufacture of fibre-reinforced plastics sheet material near the point where the fibres are to be introduced into the still plastic matrix. Owing to the threads or yarn bundles being uniformly fed across the width of the sheet material and due to the point where the threads or yarn bundles are to be cut into fibres the present invention makes it possible to obtain a uniform distribution of the fibres across the width of the sheet material   and   the   fibres   into   which the multifilament yarns are cut are deposited on the still plastic resin matrix in a practically unopened state in the form of fibre bundles or tufts.

The process and the apparatus according to the invention make it possible to manufacture a mechanically and physically attractive plastics sheet material reinforced with polyester fibres while using a high feed rate of the thread bundles of, say, 50 m/min.

The invention also comprises a fibre-reinforced plastics sheet material and the objects made therefrom.

The reinforced sheet material according to the invention may contain glass fibres as well as polyester fibres. The two fibres must then be separately fed to the still plastic resin matrix. When the matrix contains a relatively high proportion of unsaturated resins, the sheet material is still allowed to undergo a ripening process. In addition to resins, such as unsaturated polyester resins, the matrix often contains some relatively small or large percentage of fillers and, optionally, some special additives.

The invention will be further described with reference to the accompanying schematic drawing.

Figure 1 shows an apparatus for making fibre-reinforced plastics sheet material.

Figure 2 is a detailed view on a larger seale of the apparatus according to Figure 1.

Figure 3 is a view partly in side elevation and in section of the cutter roll and the cooperating pressure roll.

Figure 4 shows the variation in radial and in axial movement of the knives and the knife holders.

Figure 5 shows an embodiment which somewhat varies from the one illustrated in Figure 3.

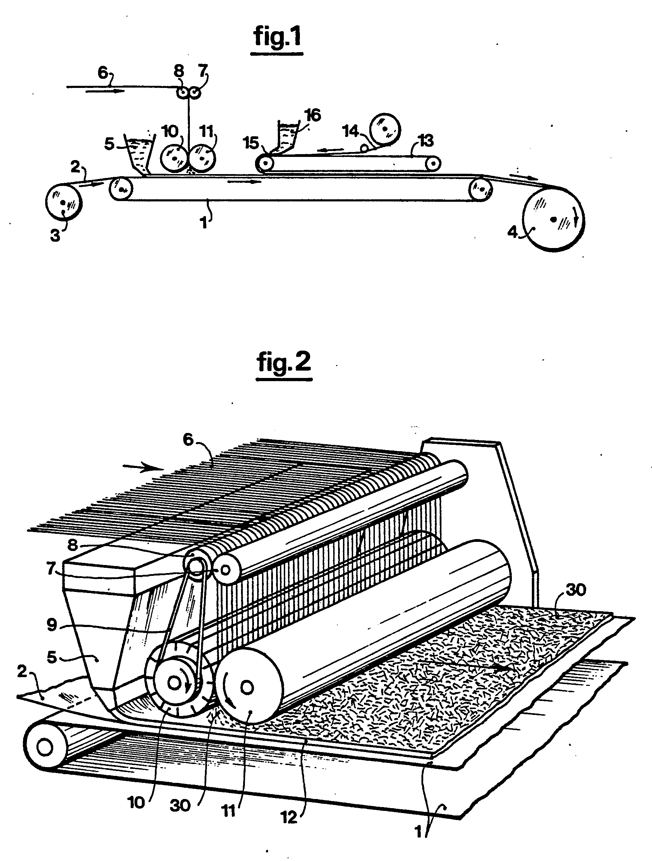

Figure 1 is a schematic illustration of an apparatus for the manufacture of fibre-reinforced sheet material. On the endless conveyor belt 1, which runs in the direction indicated by the arrow, there is placed a supporting film 2 which is unwound from a roll 3 and wound onto a roll 4. From a supply vessel 5 a first layer of resin is supplied and spread to the desired thickness over the supporting film, which may for instance be 1,50 m wide.

A large number of adjacent thread bundles 6 of filament yarns are supplied via guide rolls 7 and 8 from, for instance, bobbins (not shown) placed in a creel. The guide roll 8 is driven through a transmission element 9 (see Fig.2). The thread bundles 6 are subsequently forwarded by a cutter roll 10, which is provided with a drive (not shown), and a synchronously rotating rubber-clad pressure roll 11. In actual practice the undersides of the cutter roll 10 and the pressure roll 11 are at some distance from the upper side of the resulting sheet 12. Particularly, the distance from the centres of the rolls 10 and 11 to the surface of the sheet 12 may be approximately one and a half times the diameter of the rolls 10,11. Past the bight of the cutter roll 10 and the pressure roll 11 the continuous thread bundles 5 are cut into fibres 30 which drop on the still liquid resin compound 12 of the plastics sheet material to be manufactured. The apparatus for cutting the sheet of thread bundles 6 is shown on an enlarged scale in Figure 2. Downstream of the cutter roll 10 and the pressure roll 11 there is provided a second conveyor belt 13 on which there is placed a cover film 14 and to which there is applied a last resin top layer 15. The resin top layer 15 is supplied from a supply vessel 16 which extends across the full width of the sheet material to be formed. At the discharge end of the conveyor belt 1 there is then obtained a fibre-reinforced sheet material whose under and upper sides are covered with a film. The resulting, still plastic sheet material is wound onto the roll 4. The wound sheet material may be stored and later on subjected to various aftertreatments, such as ripening and curing at the desired pressure and temperature. The final sheet material can be cut to the desired length in a known manner.

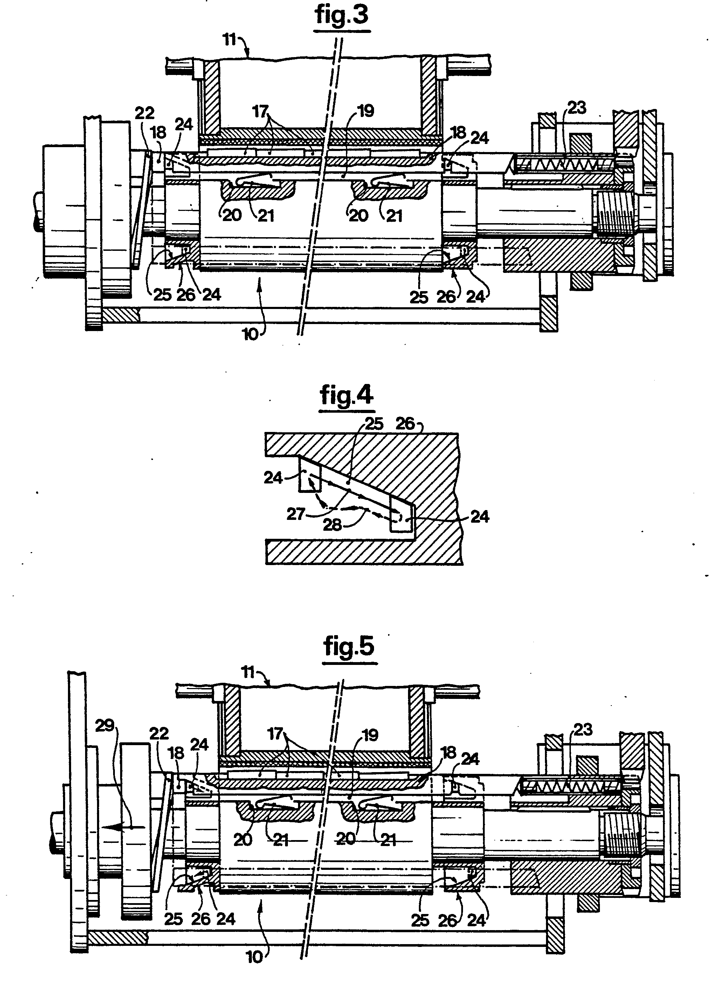

Figure 3 is a view on a larger scale of the cutter roll 10 and the cooperating pressure roll 11.

In the embodiment according to Figure 3 each knife is made up of a number of relatively short constituent knives 17 having an axial length of, say, about 5 cm, which together form a cutting edge having a length of, say, 200 cm, and 40 constituent knives each having a length of 5 cm will have to be placed in succession in a knife holder 18. Instead of 40 constituent knives one long knife 200 cm long could be used. Each knife holder 18 is axially and radially slidable in its own axial slot 19 in the cutter roll 10. The underside of the knife holder 18 rests on a number of supporting springs 21 placed in recesses 20 provided in the bottom surface of the slot 19. At their left hand end, as viewed in Figure 3, the knife holders 18 are urged into contact with an axial cam 22 by a spring 23. At both its ends each knife holder 18 is provided with guide blocks 24 which cooperate with conical guiding surfaces 25 of rings 26 which are mounted on the cutter roll 10. At the point where the cutter roll 10 and the pressure roll 11 are in rolling contact with each other the axial cam 22 is provided with an axial recess, as a result of which the respective knife holder 18 is at the right moment displaced in axial direction by the action of the spring 23 (to the left as viewed in Figure 3). During its axial movement the knife holder 18 is simultaneously moved outwards in radial direction by the action of the supporting springs 21. In this way the desired axial and radial cutting movement is imparted to the knife. Upon completion of the desired cutting movement the knife holder 18 is displaced in opposite axial direction by the axial cam 22, causing the spring 23 and the supporting springs 21 to be compressed, the guide blocks 24 cooperating with conical surfaces 25 in the rings 26. The cutting edges of the successive constituent knives 17 are somewhat staggered, as is indicated in Figure 3.

Figure 4 shows the path of travel of the guide blocks 24. During the return motion of the knife holder 18, i.e. after the cutting movement, the blocks 24 run in contact with the conical guiding surfaces along the line 27 (From the left to the right in Figure 4). This movement takes place under the influence of the guide cam 22 and against the pressure of the springs 23 and 21.

During the cutting movement the respective knife holder moves outwards only under the influence of the two springs 23 and 21. As a result, the blocks 24 are not urged into contact with the conical guiding surfaces 25 when the knives meet with resistance. Surprisingly, it has been found that during the cutting movement the blocks 24 approximately follow the path of travel 28 in Figure 4. One of the blocks 24 is shown in Figure 4 in the two extreme positions. Between these two extreme positions the block 24 moves outwards during the cutting movement, the knives meeting with resistance at some moment when they come into contact with the sheet of threads 6. Their coming into contact with the sheet of threads causes the radial movement of the knife holder 18 to be obstructed, as a result of which first a major portion of the axial motion of the knife holder 18 will be effected. Therefore, the knife holder 18 will automatically make some kind of cutting and sawing movement. During the cutting movement the knife holders consequently have some freedom of movement whose optimum automatically adjusts itself, only the two extreme positions shown in Figure 4 of the blocks 24 being fixed. In other words during the cutting movement of the knives the ratio between the axial and the radial velocity components of the composite movement is variable. More particularly under the influence of the contact between the knives and the sheet of threads, the ratio between the axial and the radial velocity components of the composite movement temporarily increases to subsequently decrease. Owing to this special variation in the cutting movement the cutting process will proceed in a very favourable manner, the cutting movement being automatically adapted to the state of the knives, which gradually become less sharp, so that the edge life of the knives is considerably prolonged. Moreover, the manufacturing process according to the invention can be kept going for a long time without any interruptions, which has a benificial effect on the endproduct both from a qualitative and a quantitative point of view. The process according to the invention results in obtaining plastics sheet material reinforced with polyester or other organic fibres which displays optimum physical and mechanical properties, particularly in that the fibres are very uniformly distributed in the sheet material and the freshly cut fibres are deposited on the still plastic matrix in the form of bundles or tufts of fibres.

Figure 5 shows an embodiment of the cutter roll 10 which differs from the embodiment according to Figure 3 only in that the guide element in the form of the cam 22 can be displaced in the direction indicated by the arrow 29. Further, the ring 26 is somewhat displaced relative to its position in Figure 3. The possibility of displacing the cam 22 very much simplifies exchanging the knife holders, which operation will consequently become less time consuming.

In actual practice the cutter roll 10 may be clad with a layer of rubber and have an outer diameter of, say, about 320 mm, and on its outer circumference there may be placed 40 knife holders 18 provided with knives 17 which are spaced at centre-to-centre distances of about 25 mm. The length of the fibre tufts will consequently also be about 25 mm. The process according to the invention is, of course, not limited to fibre bundles of that length. It also permits the use of various other lengths.

In some special embodiment the finished plastics sheet material according to the invention may consists of, for instance, 30 % by weight of unsaturated polyester resin, 30 % by weight of polyester fibres and 40 % by weight of fillers in the form of calcium carbonate. A small proportion of these last-mentioned substances may be replaced with various additives. Instead of polyester resin epoxy resin or

- 10 -    0012464

polyurethane resin may be used. The percentage by weight of reinforcing fibres in the finished sheet material also may vary and will generally range from 10 to 40 %. Optionally, part of the reinforcing fibres may be formed by glass fibres, i.e. inorganic fibres, which are fed to the still plastic matrix while kept separate from the polyester fibres.

It should be added that from British Patent Specification 800 899 an apparatus is known for the production of cut fibres from several adjacent thread bundles. This apparatus is rather intricate and not suitable for the cutting of a relatively large number of adjacent thread bundles forming a wide sheet of threads.

East German Patent Specification 24 496 describes an apparatus in which a single bundle of yarn can be cut into fibres by means of a cutter roll and a cooperating pressure roll, the knives making a cutting movement having both an axial and a radial component. The knives and the springloaded rods attached to them are slidably supported in slots provided in the cutter roll, the bottom of said slots being at an acute angle with the axial direction of the cutter roll and with the cutting edges. Because of the relatively heavy construction and the relatively high frictional resistance this known apparatus is not considered suitable for the cutting of a large number of adjacent thread bundles fed to the cutter roll.

The cutting machine described in British Patent Specification 384 335, corresponding to French Patent Specification 735 209, is rather intricate in the first place because of the use of two cutter rolls. The knife blades can move both in radial and in axial direction. The radial movement is effected by intermittantly pushing the knife holders outwards with the aid of a cam. This radial movement is consequently too rigid, as a result of which the cutting process will not proceed smoothly and optimally and the performance of the cutting apparatus may therefore not be trouble-free.

British Patent Specification 1 002 200 describes a process for the manufacture of fibre-reinforced sheet material, in which process the synthetic resin is supplied onto the surface of a bath of liquid. The apparatus then used for cutting fibres is not suitable for simultaneously cutting a large number of adjacent yarn bundles into fibres. Nor does this known apparatus very well permit obtaining a uniform distribution of the fibres across the width of the sheet material to be formed.

United States Patent Specification 3 220 905 describes a process for manufacturing glass fibres for reinforcing purposes. Prior to the cutting process the glass yarn is successively provided with a resinous binder and subjected to a special heat treatment. In this relatively intricate and costly manner it is also achieved that the glass fibres will adhere in the form of bundles.

The Netherlands Patent Specification 7 304 016 describes a process for cutting glass yarns into fibres, in which process the accumulation of tufts between the blades is prevented by blowing air into the spaces between the blades. In the process according to the invention it is unnecessary and undesirable to blow air into the cutter. For in the manufacture of sheet material it may lead to a non-uniform distribution of the fibres across the width of the sheet. Moreover, is may inhibit the formation of a large number of fibre bundles or tufts made up of a large number of parallel fibres.

C L A I M S

1. A process for the manufacture of a plastics sheet material formed from a resin-containing matrix and reinforced with synthetic organic fibres, in which process a large number of thread bundles which are placed    adjacent to each other across the width of the sheet to be formed are fed to a rotary cutter roll extending transversely of the sheet and positioned above it, with the aid of which roll the thread bundles are cut into fibres which as they drop on a plastic matrix are distributed across the width thereof, after which the fibres deposited on the matrix are covered with another layer of said matrix and the resulting plastics fibre-containing sheet material is subjected to an aftertreatment, characterized in that during the cutting movement the cutting edges of the knives move both in axial and in radial direction of the cutter roll, and the adjacent thread bundles extend over an axial length of the cutter roll of 100 cm or more, and the cutting of the thread bundles into fibres is carried out at such a distance from the plastics sheet material to be formed that the freshly cut fibres drop on the still plastic matrix substantially in the unopened state in the form of fibre bundles.

2. A process according to claim 1, characterized in that the axial length of the axial component of the cutting movement is not more than 1 - 5 cm, and the radial component of the cutting movement is not longer than 5 - 20 mm.

3. A process according to one or more of the preceding claims, characterized in that between the beginning and the end of said cutting movement the ratio between the axial and the radial velocity components of the composite cutting movement is variable.

4. A process according to claim 3, characterized in that under the influence of the contact of the knives with the bed of filaments the ratio between the axial and the radial velocity components of the composite cutting movement first increases and subsequently decreases.

5. A process according to claim 1 or 2, characterized in that the adjacent thread bundles extend over an axial length of the cutter roll of 100 to 500 cm, preferably 100 to 200 cm.

6. A process according to claim 1 or 2, characterized in that use is made of reinforcing fibres of polyester.

7. An apparatus for cutting thread bundles destined for use in the process according to claims 1 - 6, which apparatus is formed by a frame containing a rotably supported cutter roll, provided with a number of knives distributed around its circumference and substantially extending in axial direction of the cutter roll, which apparatus is characterized in that guide elements are provided which cooperate with the knives or the knife holders and periodically impart to the separate knives a cutting movement having a component in axial and a component in radial direction of the cutter roll.

8. An apparatus according to claim 7, characterized in that the knives with knife holders extend over an axial length of the cutter roll of 100 cm or more and the knives with the knife holders are mounted for radial and axial movement in a slot by means of a support.

9. An apparatus according to claim 8, characterized in that the support is formed by one or more elastic elements which are so constructed that they can exert on the knives only a substantially radially and outwardly directed force.

10. An apparatus according to one or more of the claims 7-9, characterized in that each of the knives or the knife holders has its one end urged by spring pressure into direct or indirect contact with a stationary guide element 22 serving to guide the axial movement of the knives, and the knife holder 18 and the cutter roll 10 are provided with cooperating guide elements 24, 25 for imparting the radial move- .ment to the knife holders during said axial movement.

11. An apparatus according to one or more of the claims 7 - 10, characterized in that the cutter roll and the cooperating pressure roll have an axial length of 100 to 500 cm, and preferably of 100 to 200 cm, and are placed on a machine for the manufacture of fibre-reinforced synthetic sheet material near the point where the fibres are to be introduced into the still plastic synthetic compound.

12. Fibre-reinforced plastics sheet material made by the process of one or more of the claims 1-6.

13. Shaped objects made from the plastics sheet material according to claim 12.

## fig.1

## fig.2

fig.3

fig.4

fig.5

**European Patent Office**

## EUROPEAN SEARCH REPORT

Application number

EP 79 20 0705

| Category | Citation of document with indication, where appropriate, of relevant passages | Relevant to claim |
|---|---|---|
| | NL - A - 66 01422 (LANDBOUWWERK-TUIGEN- EN MACHINEFABRIEK H. VIS-SERS N.V.)<br>\* Pages 2,3; figures 1,2 \*<br>& DE - A - 1 629 519<br>-- | 1,11,12 |
| | GB - A - 910 674 (SEAL ZIT COMPANY OF AMERICA)<br>\* Page 1, lines 14-84; page 2, lines 1-43; figures 4,7,9 \*<br>-- | 1,11,12 |
| D | FR - A - 735 209 (H. DREYFUS)<br>\* Page 1, lines 22-37, 50-54; page 2, lines 3-8, 31-51; page 3, lines 16-46; figures 1-3 \*<br>-- | 7,9 |
| | GB - A - 785 935 (VERSIL LTD.)<br>\* Page 1, lines 8-73; page 2, lines 109-126; claim 1; figures 1,2 \*<br>-- | 1,11-13 |
| A | GB - A - 857 144 (CANADIAN INGER-SOLLRAND COMPANY)<br>\* Page 3, lines 7-50; figures 4-8 \*<br>---- | 9 |

### DOCUMENTS CONSIDERED TO BE RELEVANT

**CLASSIFICATION OF THE APPLICATION (Int. Cl. 3)**

D 01 G 1/04
B 29 D 3/02

**TECHNICAL FIELDS SEARCHED (Int.Cl. 3)**

D 01 G
B 29 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |
| Place of search<br>The Hague | Date of completion of the search<br>12-03-1980 | Examiner<br>MUNZER |

EPO Form 1503.1 06.78